# EUROPEAN PATENT SPECIFICATION

(11) **EP 4 123 188 B1**
(45) Date of publication and mention of the grant of the patent: **16.07.2025**
(21) Application number: 22180591.4
(22) Date of filing: 23.06.2022
(51) Int. Cl.: F16B 25/00, F16B 25/10

(54) **SCREW**
SCHRAUBE
VIS

(30) Priority: 21.07.2021 TW 110126804
(43) Date of publication of application: 25.01.2023
(60) Divisional application: 25178573.9
(73) Proprietor: Chao, Ying-Chin, Kaohsiung City 82443 (TW)
(72) Inventor: Chao, Ying-Chin, Kaohsiung City 82443 (TW)
(74) Representative: Page White Farrer

(56) References cited:
- EP-A1- 3 249 244
- EP-A1- 3 364 056
- WO-A1-2006/133542
- CN-Y- 201 425 048
- DE-A1- 102019 135 819
- US-A- 2 232 336
- US-A- 45 133
- US-A1- 2017 108 026

## Description

The disclosure relates to a fastener, and more particularly to a screw. The document EP 3 364 056 A1 shows a screw of the prior art.

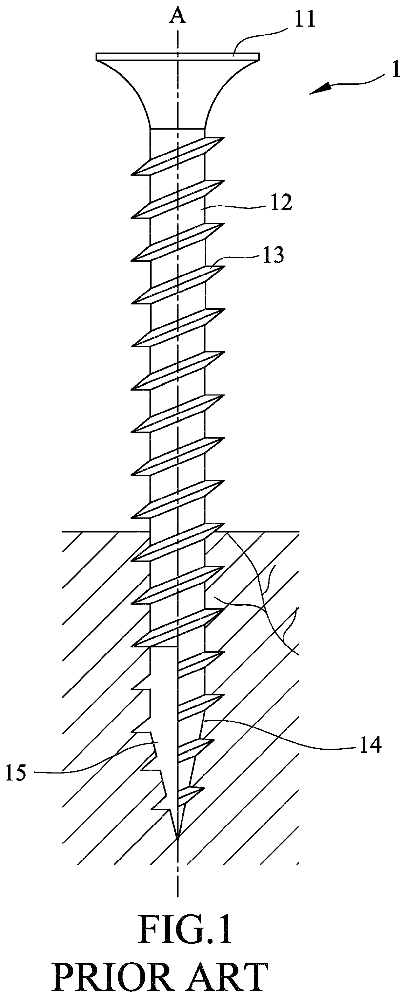

Figure 1 illustrates an existing screw 1. The screw 1 includes a head 11, a shank 12 extending from the head 11, a thread 13 extending helically around the shank 12, and a tip end 14 extending from an end of the shank 12 opposite to the head 11. To reduce the risk of cracks during drilling a wooden workpiece, the tip end 14 is formed with a V-shaped chip discharge groove 15 with a right-angled corner. The chip discharge groove 15 occupies one quarter of a cross sectional area of the screw 1 transverse to a central line (A) of the screw 1.

During screwing the screw 1 into the wooden workpiece, through a torsional force applied to the head 11, the tip end 14 is rotated to drill the wooden workpiece. However, the hollow space of the chip discharge groove 15 is too small to discharge cut chips efficiently. Thus, the thread 13 and the shank 12 driven by a high torsional force can impose excessive compression pressure to the wooden workpiece through the cut chips accumulated around the screw 1, thereby cracking or damaging the wooden workpiece. In addition, the torsional force that is increased to drive the screw 1 can cause a hand injury to a user.

Therefore, one object of the disclosure is to provide a screw that can alleviate at least one of the drawbacks of the prior art.

The invention is a screw with the features of claim 1.

Other features and advantages of the disclosure will become apparent in the following detailed description of the embodiments with reference to the accompanying drawings, of which:
Figure 1 is a side view illustrating an existing screw;
Figure 2 is a side view illustrating a screw according to a first embodiment of the disclosure;
Figure 2-1 is an enlarged view of a portion of the screw from Figure 2;
Figure 3 is a fragmentary enlarged view illustrating a screw according to a second embodiment of the disclosure which includes chip discharge grooves and ribs;
Figure 3-1 is a same view as Figure 3, but illustrating the ribs in a different orientation;
Figure 3-2 is a side view illustrating a variant of the second embodiment having the ribs being disposed proximate to a head of the screw;
Figure 4 is an enlarged view illustrating another variant of the screw of the second embodiment;
Figure 5 is a side view illustrating a screw according to a third embodiment of the disclosure;
Figures 5-1 to 5-7 are side views illustrating variants of the screw of the third embodiment;
Figure 6 is an enlarged view illustrating a screw according to a fourth embodiment of the disclosure;
Figures 6-1 to 6-7 are enlarged views illustrating variants of the screw of the fourth embodiment;
Figure 7 is a side view illustrating a screw according to a fifth embodiment of the disclosure;
Figures 7-1 to 7-3 are side views illustrating variants of the screw of the fifth embodiment;
Figure 8 is a side view illustrating a screw according to a sixth embodiment of the disclosure;
Figures 8-1, 8-2, 8-4, and 8-5 are side views illustrating variants of the screw of the sixth embodiment;
Figures 8-3 is an enlarged view illustrating a variant of the screw of the sixth embodiment;
Figure 9 is an enlarged view illustrating a screw according to a seventh embodiment of the disclosure; and
Figures 10-1 to 10-6 are cross sectional views illustrating various configurations of the chip discharge grooves of the screw.

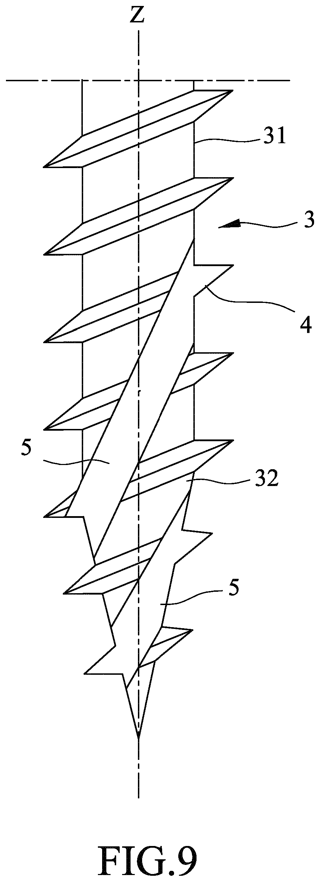

Only figure 9 shows an embodiment of the invention.

Before the disclosure is described in greater detail, it should be noted that where considered appropriate, reference numerals or terminal portions of reference numerals have been repeated among the figures to indicate corresponding or analogous elements, which may optionally have similar characteristics.

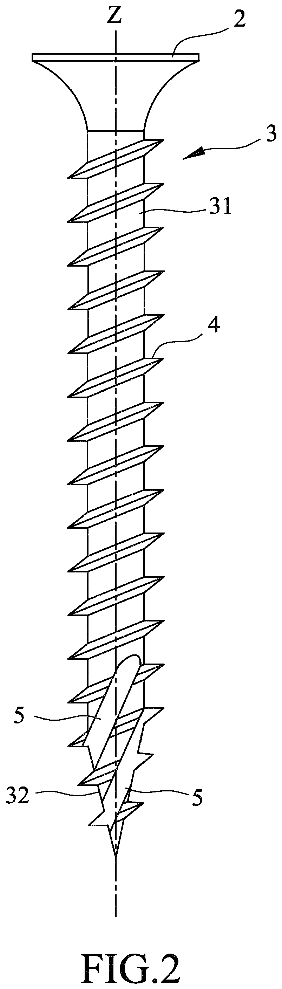

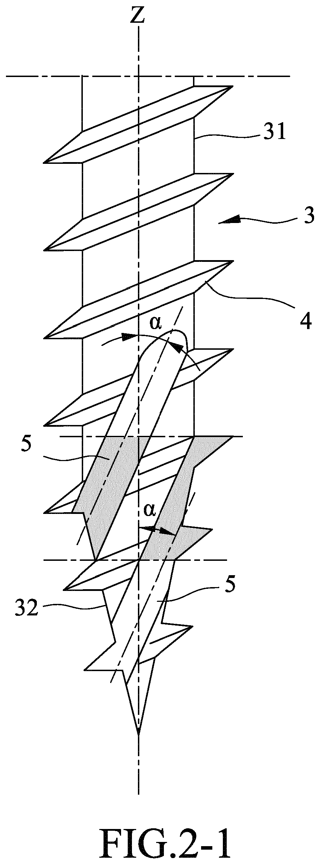

Figure 2 illustrates a screw according to a first embodiment of the disclosure. The screw includes a head 2, a shank 3, a thread 4 and two chip discharge grooves 5.

The shank 3 defines an axis (Z). The thread 4 helically extends around the shank 3. In this embodiment, the shank 3 includes a main body 31 connecting the head 2 and a tip portion 32 connecting an end of the main body 31 opposite to the head 2. The tip portion 32 is tapered. When the shank 3 is rotated by rotating the head 2, the tip portion 32 and the thread 4 cooperate with each other to effect drilling and tapping.

As shown in Figure 2-1, the chip discharge grooves 5 are indented into the shank 3. Each discharge groove 5 is inclined at an inclination angle (α) of between 5 and 35 degrees relative to the axis (Z). A depth of each chip discharge groove 5 is half an outer diameter of the thread 4. At least one of the chip discharge grooves 5 extends in the tip portion 32 of the shank 3. An upper one of the chip discharge grooves 5 has a width 0.3 to 4.5 times a width of a lower one of the chip discharge grooves 5 proximate to the tip portion 32 of the shank 3. A distance between the chip discharge grooves 5 is greater than 0.3mm. Orthogonal projections of the chip discharge grooves 5, which are projected onto a plane extending along the axis (Z), overlap each other as shown by an overlapping region between two phantom lines in Figure 2-1. The distance between the two chip discharge groves 5 is designed depending on the inclination angle (α) and the outer diameter of the shank 3. While two of the chip discharge grooves 5 are exemplified in this embodiment, the number of the chip discharge grooves 5 can be equal to or greater than 3. When the number of the chip discharge grooves 5 is greater than 2, at least two of the chip discharge grooves 5 are parallel with each other and are disposed on a same side relative to the axis (Z) of the shank 3.

Noteworthily, when the depth of each chip discharge groove 5 is greater than half the outer diameter of the thread 4, though the amount of chips discharged from the chip discharge grooves can be increased, the shank 3 is overcut and becomes thinned. This can affect the structural strength of the shank 3. Even though the structural strength of the shank 3 may be enhanced by heat treatment in a post-processing procedure, the hardness of the shank 3 after the heat treatment will become excessive and thus increases the risk of brittle breakage. If the chip discharge groove 5 proximate to the tip portion 32 of the shank 3 has a depth smaller than half the outer diameter of the thread 4, though the structural strength of the shank 3 is increased, the effect of discharging and receiving chips can be unsatisfactory.

Table 1 illustrates test results that compares the first embodiment with Controls 1 and 2. Two chip discharge grooves in Control 1 are parallel with each other and inclined at an inclination angle smaller than 5 degrees; two chip discharge grooves in Control 2 are parallel with each other and inclined at an inclination angle greater than 35 degrees.

**Table 1**

| Inclination angle | <5degrees (control 1) | between 5 and 35 degrees ( first embodiment) | >35 degrees (control 2) |
|---|---|---|---|
| Torque value (Kg/cm2) | | | |
| Test 1. | 31.8 | 15.9 | 33.6 |
| Test 2. | 39.2 | 19.8 | 41.9 |
| Rotation speed:50~500(rpm); | | | |
| axial simulation thrust:23(Kg) | | | |

The test results in Table 1 reveals that, by optimizing the inclination angles of the chip discharge grooves, torsional forces required to screw in the screws of the disclosure are less than those required by Controls 1 and 2. This is because the resistance against the screwing of the screw of the disclosure is reduced due to effective discharge of cut chips. In order to match with various sizes of screws and various types of wooden workpieces used in different fields, the width of the chip discharge grooves 5 may be adjusted to be cooperative with the inclination angle (α) that is optimized according to the disclosure. For example, when the thread 4 has the outer diameter of 8mm, one of the chip discharge grooves 5 proximate to the tip portion 32 may have the width of between 2.5 and 8.5 mm. In general, a suitable width of the lower chip discharge groove 5 proximate to the tip portion 32 is half the outer diameter of the thread 4. The width of the upper chip discharge groove 5 is designed to depend on the width of the lower chip discharge groove 5. During drilling operation, because the torsional force required to drive the screw of the disclosure into a wooden workpiece is reduced, the risk of cracking or damaging the wooden workpiece is reduced.

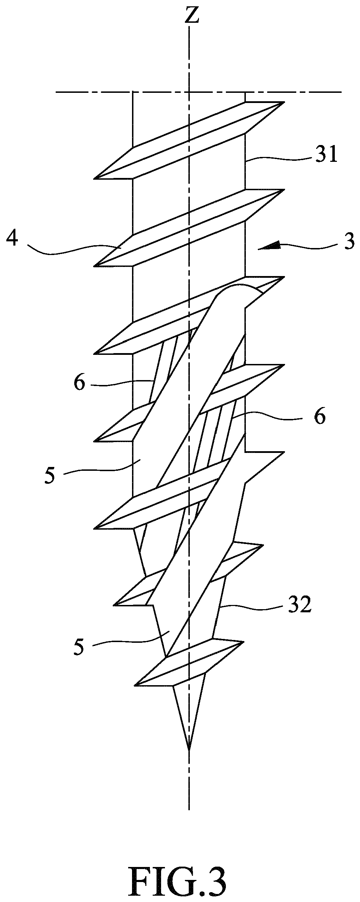

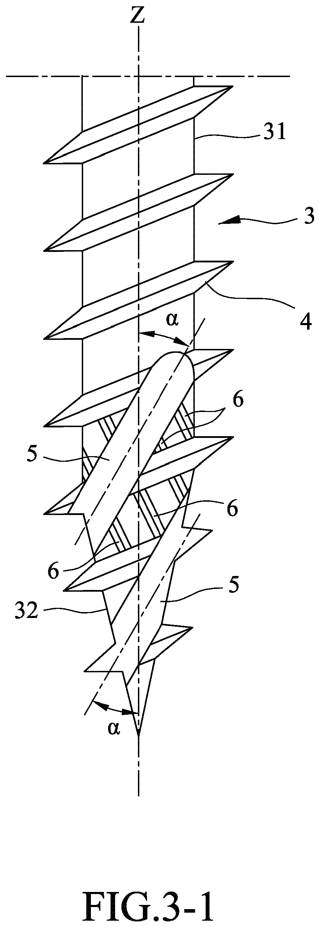

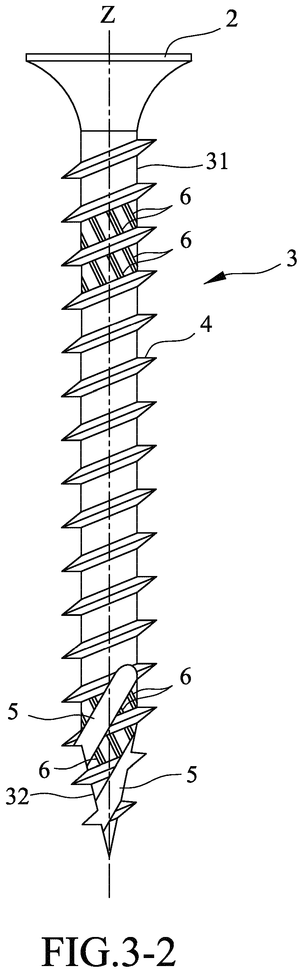

Figure 3 illustrates a screw according to a second embodiment of the disclosure, which has a structure generally similar to that of the first embodiment. However, in this embodiment, the screw further includes multiple sets of ribs 6. Each set of the ribs 6 is disposed between two adjacent thread pitches of the thread 4. As shown in Figure 3-1, the chip discharge grooves 5 cross some of the ribs 6 proximate to the tip portion 32 of the shank 3. Adding multiple ribs 6 between the thread pitches in this embodiment optimizes the effect of enlarging hole, which can help reduction of the screwing resistance. Each rib 6 can be inclined relative to or parallel with the axis (Z) of the shank 3. Further, each rib 6 can extend in a direction similar or opposite to that of the chip discharge grooves 5. The direction of each rib 6 is not limited only to those shown in Figures 3 and 3-1. Figure 3-2 illustrates that additional ribs 6 are disposed proximately to the head 2 so that the hole enlarging effect can be optimized further.

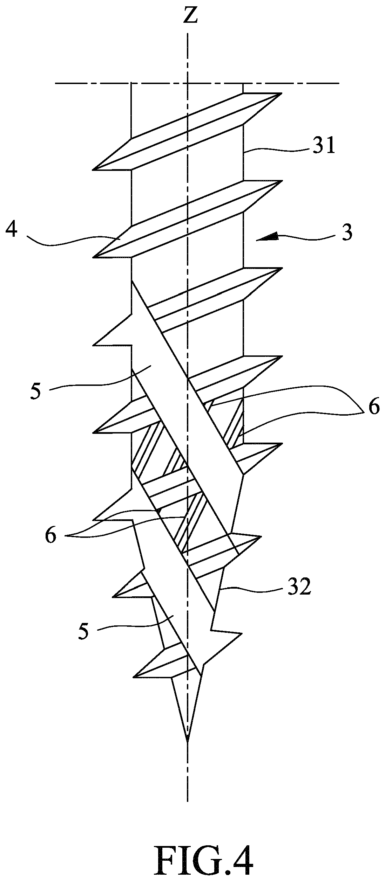

Figure 4 illustrates a variant of the screw of the second embodiment. In this variant, each chip discharge groove 5 extends in a direction different from that of each chip discharge groove 5 shown in Figures 3 to 3-2. In addition, the ribs 6 extend in a direction opposite to that of the chip discharge grooves 5.

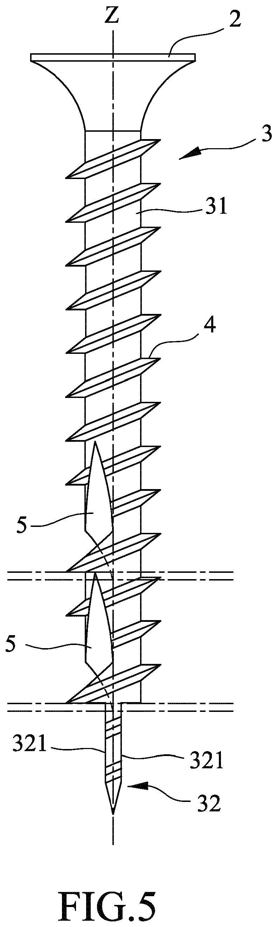

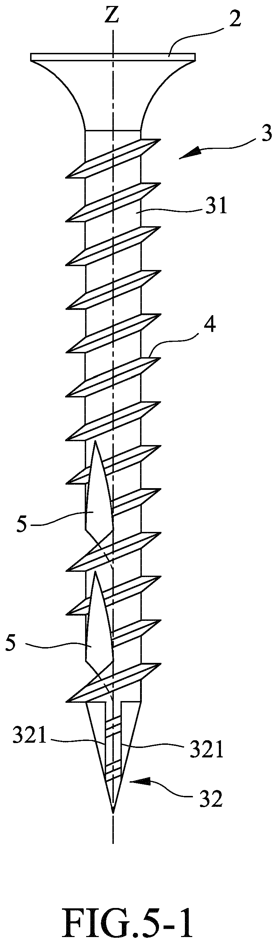

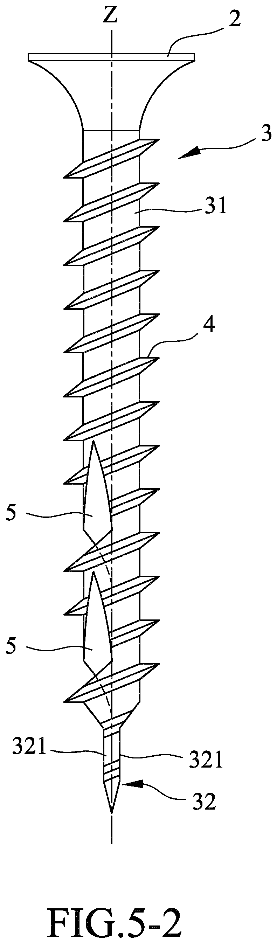

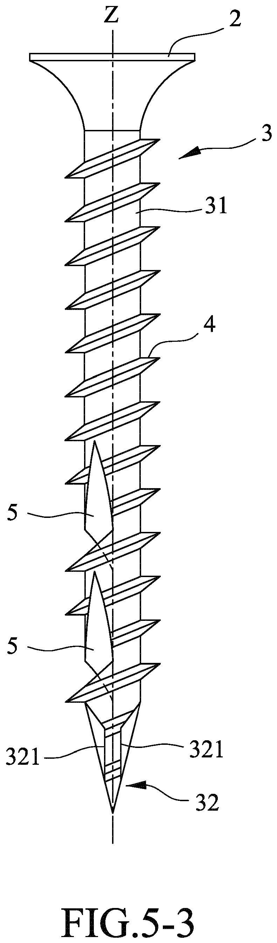

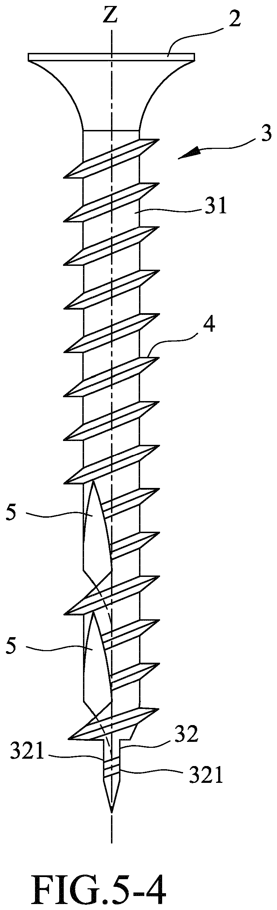

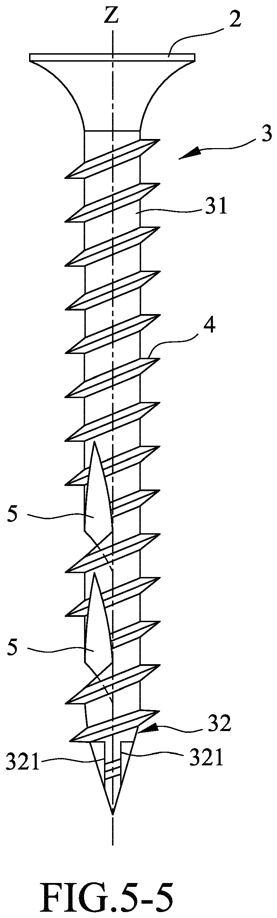

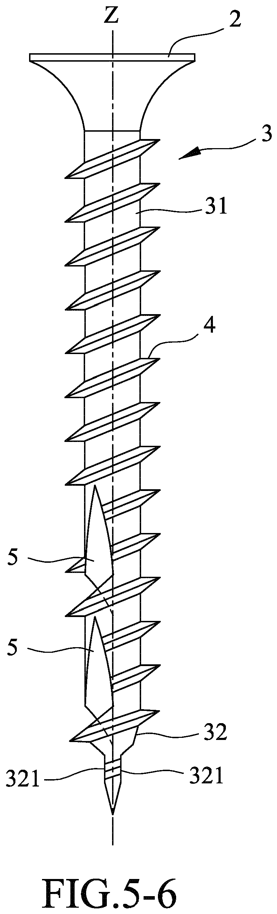

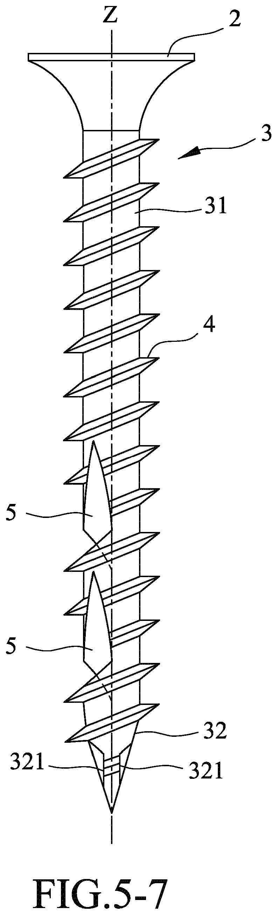

Figure 5 illustrates a screw according to a third embodiment of the disclosure, which has a structure generally similar to that of the first embodiment. However, in this embodiment, the tip portion 32 has two cutting faces 321 respectively disposed on two opposite sides of the axis (Z) of the shank 3. The cutting faces 321 can function similarly to the chip discharge grooves 5 for reducing the torsional force. As shown in Figure 5, orthogonal projections of the chip discharge grooves 5, which are projected onto a plane extending along the axis (Z), overlap each other (see the region between two upper phantom lines). In addition, one of the chip discharge grooves 5 proximate to the cutting face 321 has an orthogonal projection which is projected onto a plane extending along the axis (Z) and which overlaps an orthogonal projection of the cutting face 321 onto the same plane (see the region between two lower phantom lines). As shown in Figures 5, 5-1 to 5-3, each cutting face 321 can have a configuration selected from a right angled configuration, a chamfered corner configuration, an oblique-angled configuration, and a rounded corner configuration. The cutting of each cutting face 321 begins from the main body 31 and extends to the tip portion 32 so that each cutting face 321 has one end directly connected to the main body 31. Figures 5-4 to 5-7 illustrate variants in that each cutting face 321 is completely formed in the tip portion 32. In Figures 5-2, 5-4 and 5-6, the orthogonal projections of the two chip discharge grooves 5 overlap each other. It is noted that the two chip discharge grooves 5 exemplified in each of Figs. 5, 5-1 to 5-7 are processed at the same time using two cutters with different outer diameters. However, the two chip discharge grooves 5 may be varied in position and may be processed using identical cutters.

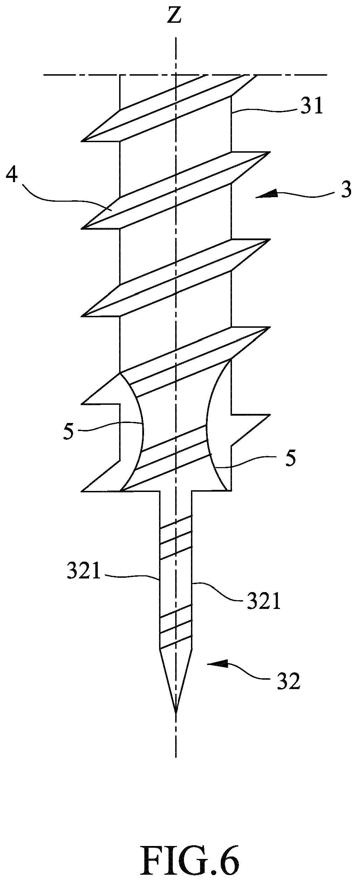

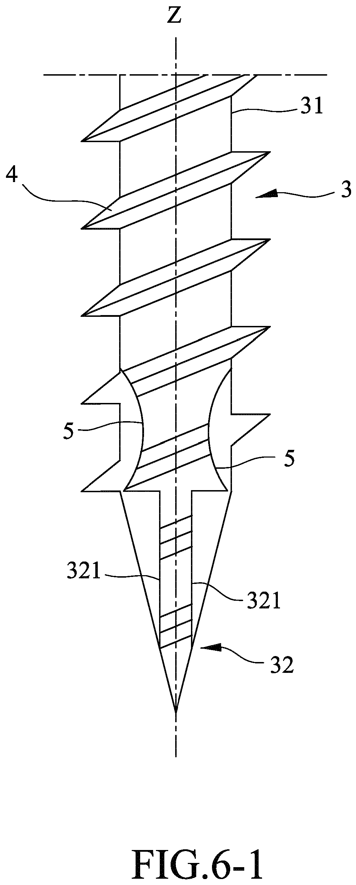

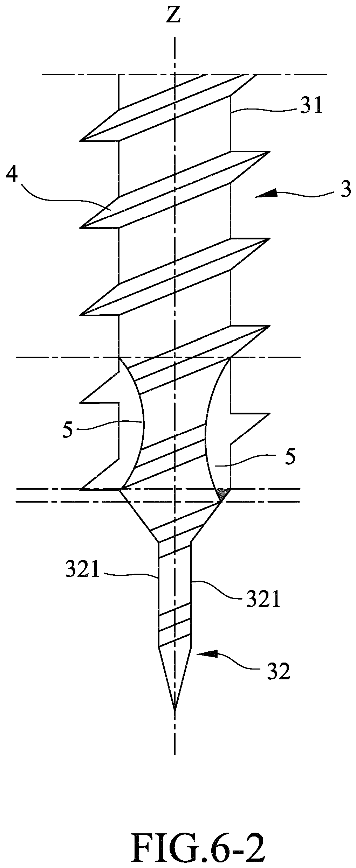

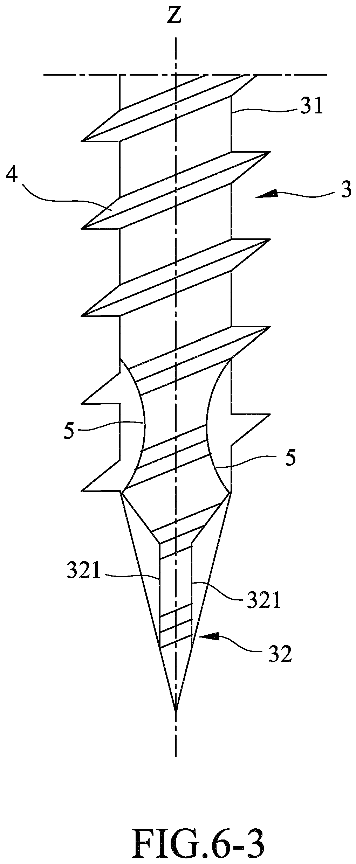

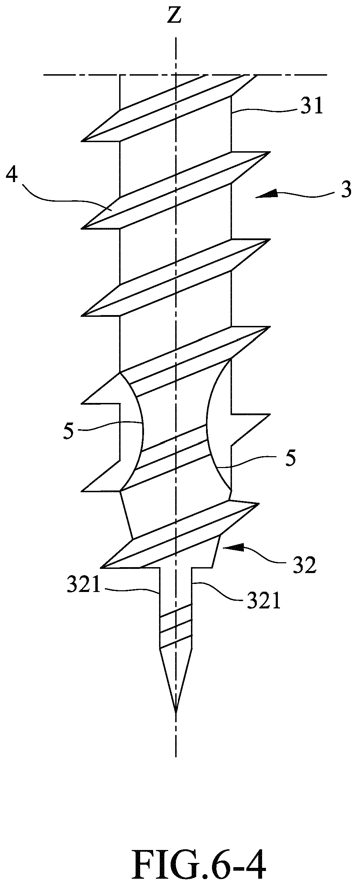

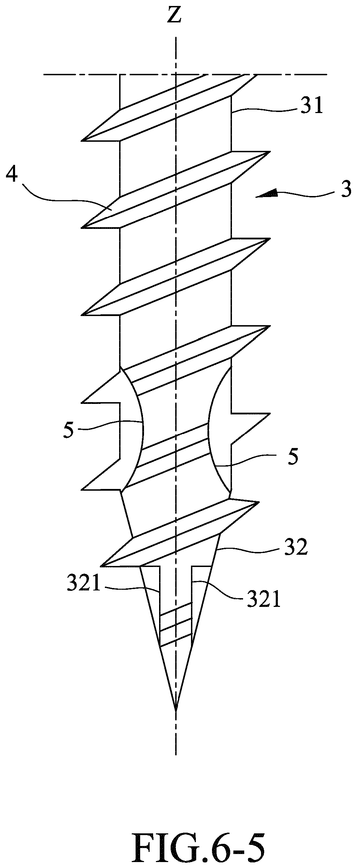

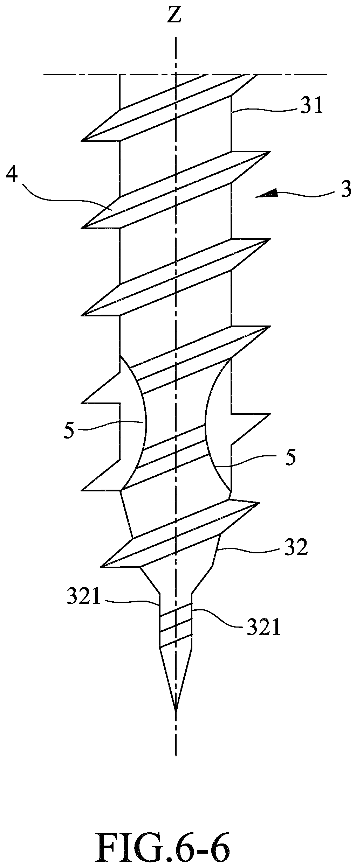

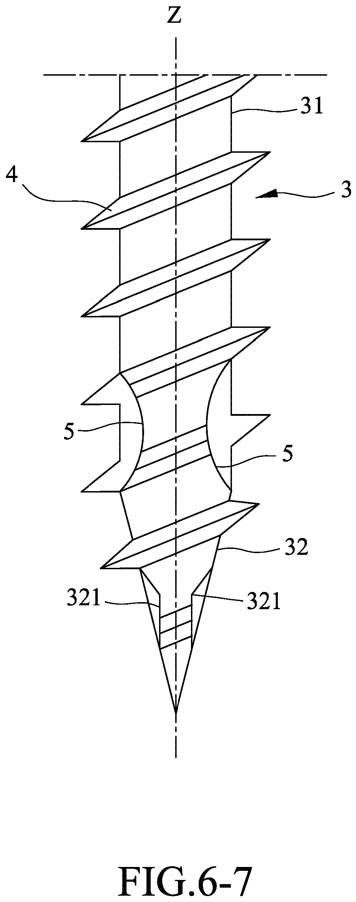

Figure 6 illustrates a screw according to a fourth embodiment of the disclosure, which has a structure generally similar to that of the first embodiment. However, in this embodiment, the tip portion 32 has two cutting faces 321 respectively disposed on two opposite sides of the axis (Z) of the shank 3; the chip discharge grooves 5 are disposed at two opposite sides of the shank 3 and respectively connect the cutting faces 321. As shown in Figures 6-1 to 6-3, each cutting face 321 has a configuration selected from a right angled configuration, a chamfered corner configuration, an oblique-angled configuration, and a rounded corner configuration. Each cutting face 321 has one end directly connected to the main body 31. In particular, Figure 6-2 illustrates that the orthogonal projections of the two chip discharge grooves 5 overlap each other. Besides, one of the cutting faces 321 and one of the chip discharging grooves 5 respectively have orthogonal projections that are projected onto a plane extending along the axis (Z) and that overlap each other.

In addition, Figures 6-4 to 6-7 illustrate that the cutting faces 321 are completely formed in the tip portion 32. Noteworthily, the chip discharge grooves 5 disposed at two opposite sides of the shank 3 can be parallel or nonparallel.

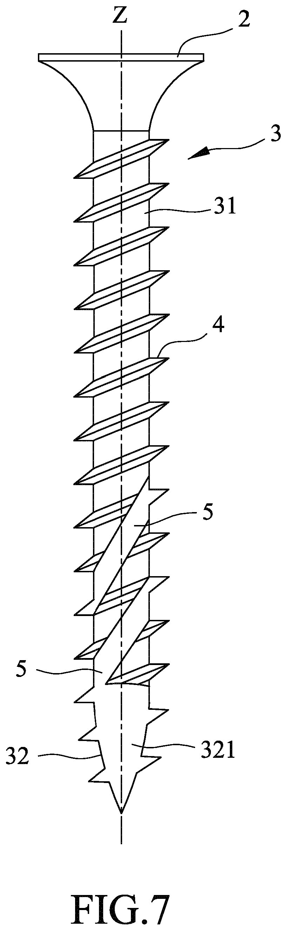

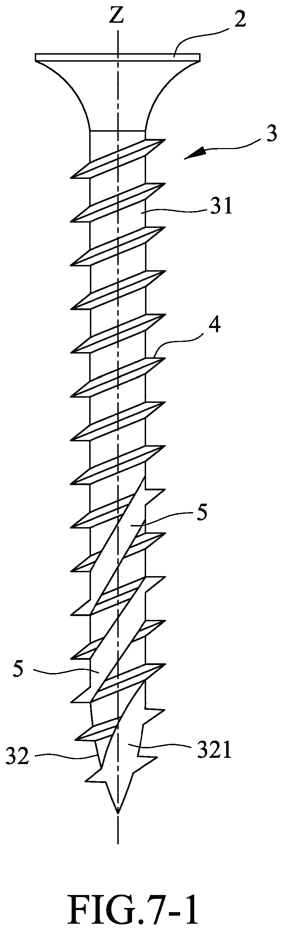

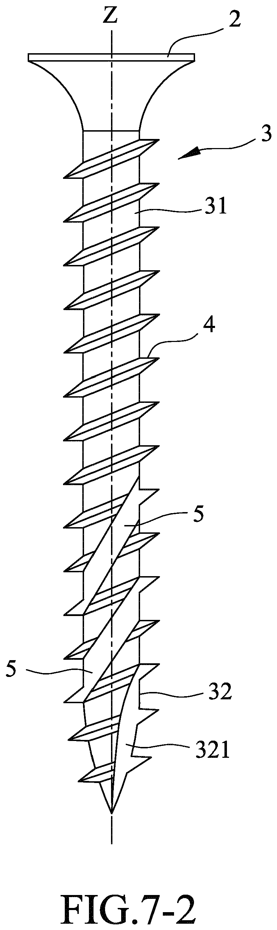

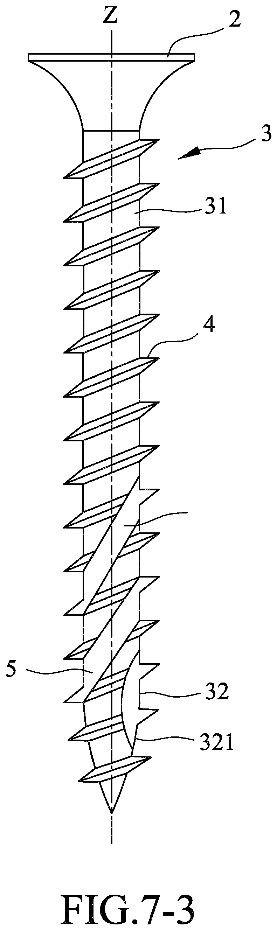

Figure 7 illustrates a screw according to a fifth embodiment of the disclosure. In this embodiment, the chip discharge grooves 5 are formed parallel in the main body 31 to facilitate processing and to reduce fabrication cost. Further, the tip portion 32 has a single cutting face 321, and one of the chip discharge grooves 5 is directly connected to the cutting face 321. As shown in Figures 7, 7-1 to 7-3, the cutting face 321 and one of the chip discharge grooves 5 respectively have orthogonal projections that are projected onto a plane extending along the axis (Z) and that overlap each other.

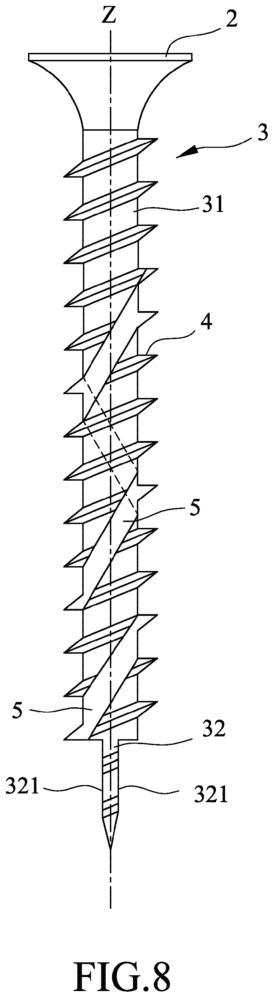

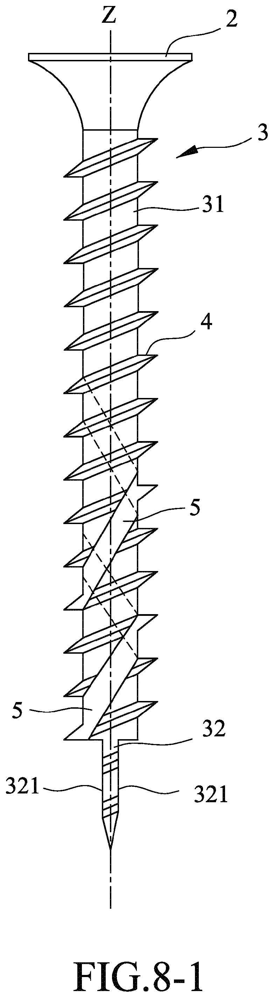

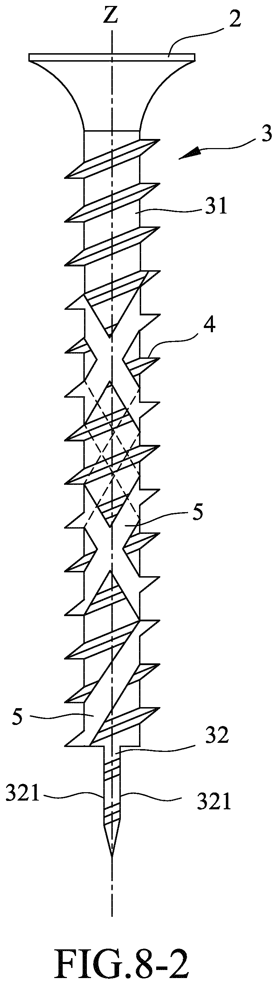

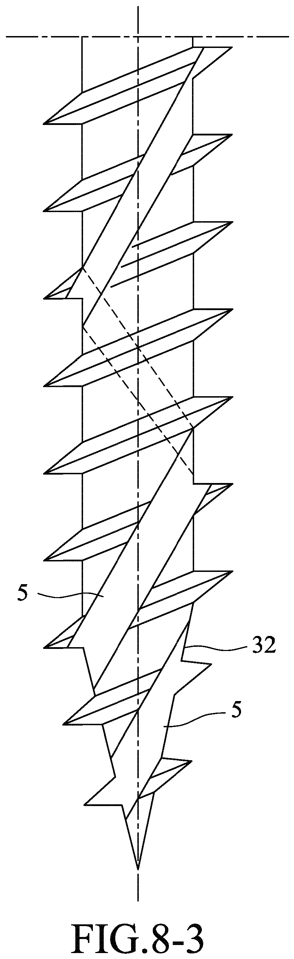

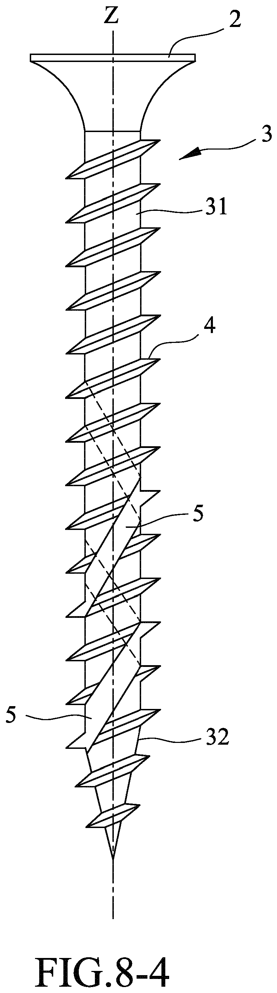

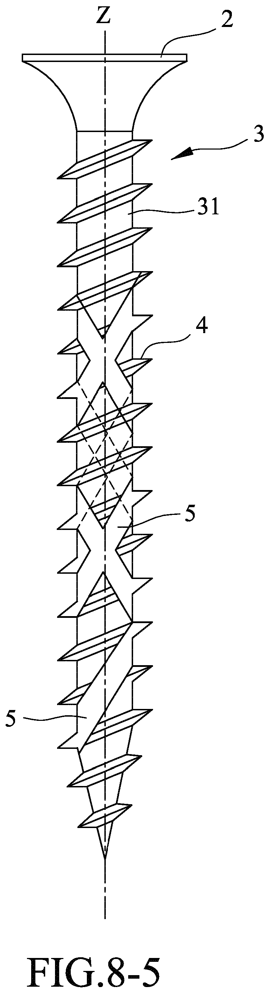

Figure 8 illustrates a screw according to a sixth embodiment of the disclosure, which has a structure generally similar to that of the third embodiment. However, in this embodiment, one of the chip discharge grooves 5 extends helically around the shank 3 and is connected to the cutting face 321. As shown in Figures 8 and 8-3, because one of the chip discharge groove 5 extends helically around the main body 31, it has a relatively long length and therefore can receive and discharge more chips. Figures 8-1 and 8-4 illustrate that the two chip discharge grooves 5 extend helically around the main body 31. Figure 8-2 and 8-5 illustrate that the two chip discharge grooves 5 extend helically in opposite directions around the main body 31.

Figure 9 illustrates a screw according to a seventh embodiment of the disclosure, which has a structure generally similar to that of the first embodiment. However, one of the chip discharge grooves 5 is inclined at 5 degrees to the axis (Z), and the other one of the chip discharge grooves 5 is inclined at 25 degrees to the axis (Z). While the discharge grooves 5 are disposed on the same side relative to the axis (Z) of the shank 3 in this embodiment, they can be disposed opposite to each other with respect to the axis (Z).

**Table 2**

| Inclination angle | <5 degrees (control 1) | between 5 and 25 degrees (the seventh embodiment) | >25 degrees (control 2) |
|---|---|---|---|
| Torque value (Kg/cm2) | | | |
| Test 1. | 21.85 | 14.27 | 19.52 |
| Test 2. | 19.37 | 14.36 | 19.29 |
| Rotation speed:50~630(rpm); | | | |
| axial simulation thrust:18.5(Kg) | | | |

Table 2 shows the results of tests that compares the seventh embodiment with Controls 1 and 2. The tests demonstrate that the torsional forces required to screw in the screw of the seventh embodiment are much less than those of Controls 1 and 2, and that the seventh embodiment has an excellent chip discharging ability. Noteworthily, although the chip discharge grooves 5 are nonparallel, as the inclination angles thereof fall between 5 and 25 degrees, the screw of the disclosure can still have satisfactory chip discharge performance.

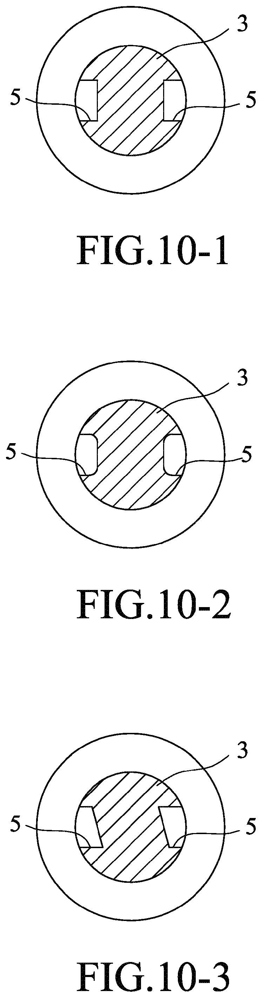

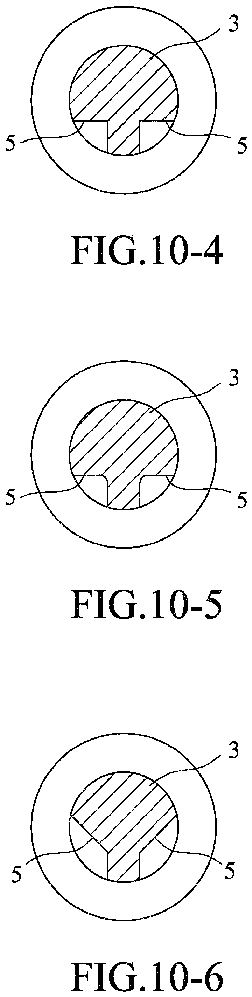

Figures 10-1 to 10-6 illustrate some cross sectional configurations of the chip discharge grooves 5, which are a right angled configuration, a chamfered corner configuration, and an oblique-angled configuration.

As described hereinabove, through the optimal values provided for the inclination angles of the chip discharge grooves 5, the screws of the disclosure can effectively discharge cut chips and thus can be operated with a reduced screwing torque. By incorporation with a suitable configuration of the tip portion 32, suitable configurations of the chip discharge grooves 5, a suitable distance between the two chip discharge grooves 5, and suitable widths of the chip discharge grooves 5, the optimized inclination angles of the chip discharge grooves 5 can enhance chip discharging and torque reducing effects.

## Claims

1. A screw comprising:
a head (2);
a shank (3) defining an axis (Z) and including a main body (31) connecting said head (2) and a tip portion (32) connecting an end of said main body (31) opposite to said head (2);
a thread (4) helically extending around said shank (3) to said tip portion (32);
**characterized by**
two chip discharge grooves (5) indented into said shank (3), said chip discharge grooves (5) being nonparallel and each inclined at an angle of between 5 and 35 degrees relative to the axis (Z);
wherein orthogonal projections of said chip discharge grooves (5), which are projected onto a plane extending along the axis (Z), overlap each other;
wherein said thread (4) and said chip discharge grooves (5) are inclined upward toward a same side of said shank (3);
wherein said two chip discharge grooves (5) are disposed on a same side relative to the axis (Z) of said shank (3); and
wherein one of said two of said chip discharge grooves (5) is inclined at an angle of 5 degrees, and the other one of said two chip discharge grooves (5) is inclined at an angle of 25 degrees.

2. The screw as claimed in Claim 1, wherein each of said at least two chip discharge grooves (5) is in a U-shaped cross section, and has three boundary surfaces that bound a chip discharge passage, two of said three boundary surfaces being parallel to each other.

## Patentansprüche

1. Eine Schraube, umfassend:
einen Kopf (2);
einen Schaft (3), der eine Achse (Z) definiert und einen Hauptkörper (31) umfasst, der den Kopf (2) mit einem Spitzenabschnitt (32) verbindet, wobei der Spitzenabschnitt (32) ein Ende des Hauptkörpers (31) gegenüber dem Kopf (2) verbindet;
ein Gewinde (4), das sich spiralförmig um den Schaft (3) bis zum Spitzenabschnitt (32) erstreckt;
**dadurch gekennzeichnet, dass**
zwei Spanabfuhrnuten (5) in den Schaft (3) eingearbeitet sind, wobei die Spanabfuhrnuten (5) nicht parallel zueinander sind und jeweils in einem Winkel zwischen 5 und 35 Grad relativ zur Achse (Z) geneigt sind;
wobei sich orthogonale Projektionen der Spanabfuhrnuten (5), die auf eine entlang der Achse (Z) verlaufende Ebene projiziert sind, überlappen;
wobei das Gewinde (4) und die Spanabfuhrnuten (5) zur gleichen Seite des Schafts (3) hin ansteigen;
wobei die beiden Spanabfuhrnuten (5) auf derselben Seite relativ zur Achse (Z) des Schafts (3) angeordnet sind; und
wobei eine der beiden Spanabfuhrnuten (5) in einem Winkel von 5 Grad geneigt ist und die andere der beiden Spanabfuhrnuten (5) in einem Winkel von 25 Grad geneigt ist.

2. Die Schraube nach Anspruch 1, wobei jede der mindestens zwei Spanabfuhrnuten (5) einen U-förmigen Querschnitt aufweist und drei Begrenzungsflächen umfasst, die einen Spanabfuhrkanal begrenzen, wobei zwei der drei Begrenzungsflächen parallel zueinander verlaufen.

## Revendications

1. Vis, comprenant :
une tête (2) ;
une tige (3) définissant un axe (Z), et incluant un corps principal (31) qui est relié à ladite tête (2) et une portion de pointe (32) qui est reliée à une extrémité dudit corps principal (31) à l'opposé de ladite tête (2) ;
un filet (4) s'étendant hélicoïdalement autour de ladite tige (3) jusqu'à ladite portion de pointe (32),
**caractérisée par** :
deux rainures d'évacuation de copeaux (5) formées en creux dans ladite tige (3), lesdites rainures d'évacuation de copeaux (5) étant non parallèles et chacune étant inclinée selon un angle compris entre 5 et 35 degrés par rapport à l'axe (Z),
dans laquelle des projections orthogonales desdites rainures d'évacuation de copeaux (5), qui sont projetées sur un plan s'étendant le long de l'axe (Z), se chevauchent l'une sur l'autre,
dans laquelle ledit filet (4) et lesdites rainures d'évacuation de copeaux (5) sont inclinés vers le haut en direction d'un même côté de ladite tige (3),
dans laquelle lesdites deux rainures d'évacuation de copeaux (5) sont disposées sur un même côté par rapport à l'axe (Z) de ladite tige (3), et
dans laquelle l'une desdites deux rainures d'évacuation de copeaux (5) est inclinée selon un angle de 5 degrés, et l'autre desdites deux rainures d'évacuation de copeaux (5) est inclinée selon un angle de 25 degrés.

2. Vis selon la revendication 1, dans laquelle chacune desdites au moins deux rainures d'évacuation de copeaux (5) présente une section transversale en forme de U et comprend trois surfaces de délimitation qui délimitent un passage d'évacuation de copeaux, deux desdites trois surfaces de délimitation étant parallèles entre elles.
